# EUROPEAN PATENT SPECIFICATION

(11) **EP 3 525 585 B1**
(45) Date of publication and mention of the grant of the patent: **24.02.2021**
(21) Application number: 17777593.9
(22) Date of filing: 04.10.2017
(51) Int. Cl.: A01N 25/00, A01N 43/56, A01P 3/00

(54) **METHOD TO CONTROL SEPTORIA TRITICI THAT IS RESISTANT TO SUCCINATE DEHYDROGENASE INHIBITOR FUNGICIDES**
VERFAHREN ZUR BEKÄMPFUNG VON SEPTORIA TRITICI, DAS GEGEN SUCCINATDEHYDROGENASEHEMMERFUNGIZIDE RESISTENT IST
PROCÉDÉ DE RÉGULATION DE SEPTORIA TRITICI RÉSISTANTE AUX FONGICIDES INHIBITEURS DE SUCCINATE DÉSHYDROGÉNASE

(30) Priority: 12.10.2016 EP 16193523
(43) Date of publication of application: 21.08.2019
(73) Proprietor: BASF SE, 67056 Ludwigshafen am Rhein (DE)
(72) Inventor: STAMMLER, Gerd, 69221 Dossenheim (DE); STROBEL, Dieter, 67273 Herxheim am Berg (DE); LORENZ, Karl-Heinz, 69221 Dossenheim (DE); SCHOEFL, Ulrich, 68782 Bruehl (DE); GEWEHR, Markus, 69502 Hemsbach (DE)
(74) Representative: BASF IP Association
(86) International application number: PCT/EP2017/075204
(87) International publication number: WO 2018/069114

(56) References cited:
- EP-B1- 2 364 293
- WO-A1-2014/060520
- WO-A1-2015/113838
- WO-A1-2015/124543

## Description

The present invention relates to a method for controlling *Septoria tritici* resistant to succinate dehydrogenase inhibitor fungicides on cereal plants, comprising treating the plants, their seed or the soil with a fungicidally effective amount of pydiflumetofen.

One task the farmer is faced with in relation to the use of pesticides is that the repeated and exclusive application of an individual pesticidal compound leads in many cases to a rapid selection of harmful fungi, which have developed acquired resistance against the active compound in question. Therefore there is a need for pest control agents that help prevent or overcome such upcoming resistance.

*Septoria tritici* is a species of filamentous fungus, an ascomycete in the family *Mycosphaerellaceae.* It is a plant pathogen causing septoria leaf blotch, which is currently the most dominant cereal disease in Western Europe. Control of Septoria leaf blotch is becoming more and more difficult for farmers. Reason is the capability of the fungi to develop resistance to widely used powerful fungicidal agents.

For example, fungicides containing azole and strobilurine mixtures have been widely and successfully used in recent years for *Septoria* control. Strobilurins lost their activity due to the development of the G143A resistance which is meanwhile widespread in most cereal growing regions in Europe (Fraaije B. A., Brunett F. J., Clark W. S., Motteram J., Lucas J. A. (2005), and WO 2015/113838). Resistance development to QoI inhibitors in populations of Mycosphaerella graminicola in the UK. Modern fungicides and antifungal compounds II, eds Lyr H., Russell P. E., Dehne H-W. Gisi U. Kuck K-H, 14th International Reinhardsbrunn Symposium, BCPC, Alton, UK, pp 63-71). Moreover, activity of azole fungicides eroded due to a sensitivity shift of *Septoria tritici* (Cools H.J., Fraaije B.A. (2013). Update on mechanisms of azole resistance in Mycosphaerella graminicola and implications for future control. Pest Management Science 69: 150-155).

So far, succinate dehydrogenase inhibitor fungicides, hereinafter referred to as "SDHI-fungicides" have been successfully applied to combat *Septoria tritici.*

However, also SDHI fungicides loose their activity due to the development of resistance in different plant pathogenic fungi (Stammler, G., Wolf, A., Glättli, A. and Klappach, K. (2015). Respiration inhibitors: Complex II. In: Fungicide Resistance in Plant Pathogens (eds. H. Ishii, D. Hollomon), pp 102-117, Springer Verlag.) and there are also first indications of SDHI resistance in *Septoria tritici* (Dooley H., Shaw M.W., Mehenni-Ciz J., Spink J. and Kildea S. (2016). Detection of Zymoseptoria tritici SDHI-insensitive field isolates carrying the SdhC-H152R and SDHD-R47W substitutions. Pest Management Science DOI 10.1002/ps.4269). SDHI resistance is of complex nature, since different mutations in the genes of the subunits (B, C and D), which make up the ubiquinone and SDHI binding site of the complex II could be found. Monitoring data published at the FRAC webpage indicated the finding of isolates of *Septoria tritici* with a moderate sensitivity loss, first with the mutations C-T79N (France) and C-W80S (UK) in 2012, followed by C-N86S (Germany) in 2013, B-N225T (Ireland) and C-T79N (Germany) in 2014. In 2015 isolates with C-V166M, B-T268I, C-N86S and C-T79N were detected in UK, France and/or Ireland. Additionally, isolates with a stronger resistance response were detected in Ireland and UK in 2015, which carry the C-H152R (FRAC webpage; Dooley H., Shaw M.W., Mehenni-Ciz J., Spink J. and Kildea S. (2016). Detection of Zymoseptoria tritici SDHI-insensitive field isolates carrying the SdhC-H152R and SDHD-R47W substitutions. Pest Management Science DOI 10.1002/ps.4269).

Surprisingly, we have found that the application of pydiflumetofen show an unexpected fungicidal action towards *Septoria tritici,* being resistant against SDHI fungicides.

Thus, the present invention comprises a method for controlling *Septoria tritici* that is already resistant to SDHI fungicides on cereals, comprising treating the plants, their seed or the soil with a fungicidally effective amount of pydiflumetofen, wherein the Septoria tritici is resistant to SDHI fungicides due to a mutation in SDH subunit B, isolate T2681, or subunit C, isolate H152R, T79N, N86S, V166M or W80S.

In one embodiment, the method comprises treating the cereal plants with a fungicidally effective amount of pydiflumetofen.

In a further embodiment, the method comprises treating cereal seeds with a fungicidally effective amount of pydiflumetofen.

The term cereal plants as used herein comprises wheat and triticale

Thus, in a preferred embodiment, the present invention relates to a method for controlling *Septoria tritici* that is resistant to SDHI fungicides on wheat or triticale, comprising treating the plants, their seed or the soil with a fungicidally effective amount of pydiflumetofen.

In a further preferred embodiment, the method comprises treating the wheat or triticale plants with a fungicidally effective amount of pydiflumetofen.

In a further preferred embodiment, the method comprises treating wheat and triticale seeds with a fungicidally effective amount of pydiflumetofen.

In a more preferred embodiment, the present invention relates to a method for controlling *Septoria tritici* that is resistant to SDHI fungicides on wheat, comprising treating the plants, their seed or the soil with a fungicidally effective amount of pydiflumetofen,

In a further more preferred embodiment, the method comprises treating the wheat plants with a fungicidally effective amount of pydiflumetofen.

In a further more preferred embodiment, the method comprises treating wheat seeds with a fungicidally effective amount of pydiflumetofen.

The term "plant propagation material" is to be understood to denote all the generative parts of the plant in particular seeds.

Plants and as well as the propagation material of said plants, which can be treated with fungicidally effective amount of pydiflumetofen include all genetically modified plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

Mixtures can be applied (as seed treatment, spray treatment, in furrow or by any other means) also to plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.

Pydiflumetofen can be converted into the customary formulations, for example solutions, emulsions, suspensions, dusts, powders, pastes and granules. The use form depends on the particular intended purpose; in each case, it should ensure a fine and even distribution of the mixtures according to the present invention. The formulations are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001). The agrochemical formulations may also comprise auxiliaries which are customary in agrochemical formulations. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesi-um sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene-sulfonic acid (Nekal® types, BASF, Germany),and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formal-dehyde, polyoxy-ethylene octylphenyl ether, ethoxylated isooctylphenol, octylphenol, nonylphenol, alkylphenyl polyglycol ethers, tributylphenyl polyglycol ether, tristearylphenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Switzerland), polycarboxylates (Sokolan® types, BASF, Germany), polyalkoxylates, polyvinylamines (Lupasol® types, BASF, Germany), polyvinylpyrrolidone and the copolymers therof.

Examples for thickeners (i. e. compounds that impart a modified flowability to formula-tions, i. e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin.

Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or conco-mitantly grinding pydiflumetofen and, if appropriate, further active substances, with at least one solid carrier. Granules, e. g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nut-shell meal, cellulose powders and other solid carriers.

Examples of formulation types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations for the treatment of plant propagation materials such as seeds (GF), herein further below exemplified in detail:

### 1. Composition types for dilution with water

### i) Water-soluble concentrates (SL, LS)

10 parts by weight of pydiflumetofen are dissolved in 90 parts by weight of water or in a water-soluble solvent. As an alternative, wetting agents or other auxiliaries are added. The active substance dissolves upon dilution with water. In this way, a formulation having a content of 10% by weight of active substance is obtained.

### ii) Dispersible concentrates (DC)

20 parts by weight of pydiflumetofen are dissolved in 70 parts by weight of cyclohexanone with addition of 10 parts by weight of a dispersant, e. g. poly-vinylpyrrolidone. Dilution with water gives a dispersion. The active substance content is 20% by weight.

### iii) Emulsifiable concentrates (EC)

15 parts by weight of pydiflumetofen are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.

### iv) Emulsions (EW, EO, ES)

25 parts by weight of pydiflumetofen are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a ho-mogeneous emulsion. Dilution with water gives an emulsion. The composition has an active substance content of 25% by weight.

### v) Suspensions (SC, OD, FS)

In an agitated ball mill, 20 parts by weight of pydiflumetofen are comminuted with addition of 10 parts by weight of dispersants and wetting agents and 70 parts by weight of water or an organic solvent to give a fine active substance sus-pension. Dilution with water gives a stable suspension of the active substance. The active substance content in the composition is 20% by weight.

### vi) Water-dispersible granules and water-soluble granules (WG, SG)

50 parts by weight of pydiflumetofen are ground finely with addi-tion of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.

### vii) Water-dispersible powders and water-soluble powders (WP, SP, SS, WS)

75 parts by weight of pydiflumetofen are ground in a rotor-stator mill with addition of 25 parts by weight of dispersants, wetting agents and silica gel. Dilution with water gives a stable dispersion or solution of the active substance. The active substance content of the composition is 75% by weight.

### viii) Gel (GF)

In an agitated ball mill, 20 parts by weight of pydiflumetofen are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.

### 2. Composition types to be applied undiluted

### ix) Dustable powders (DP, DS)

5 parts by weight of pydiflumetofen are ground finely and mixed intimately with 95 parts by weight of finely divided kaolin. This gives a dustable compo-sition having an active substance content of 5% by weight.

### x) Granules (GR, FG, GG, MG)

0.5 parts by weight of pydiflumetofen is ground finely and associ-ated with 99.5 parts by weight of carriers. Current methods are extrusion, spray-drying or the fluidized bed. This gives granules to be applied undiluted having an active sub-stance content of 0.5% by weight.

### xi) ULV solutions (UL)

10 parts by weight of pydiflumetofen are dissolved in 90 parts by weight of an organic solvent, e. g. xylene. This gives a composition to be applied undiluted having an active substance content of 10% by weight.

The agrochemical formulations generally comprise between 0.01 and 95%, preferably between 0.1 and 90%, most preferably between 0.5 and 90%, by weight of active substances.

Pydiflumetofen can be used as such or in the form of their compositions, e. g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds present in the pydiflumetofen.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active sub-stance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of pydiflumetofen .

Pydiflumetofen may also be used successfully in the ultra-low-volume process (ULV), it being possible to apply compositions comprising over 95% by weight of active substance, or even to apply the active substance without addi-tives.

Various types of oils, wetters, adjuvants, herbicides, fungicides, other pesticides, or bactericides may be added to the active compounds present in the pydiflumetofen, if appropriate not until immediately prior to use (tank mix). These agents can be admixed with pydiflumetofen in a weight ratio of 1:100 to 100:1, preferably 1:10 to 10:1.

Compositions of this invention may also contain fertilizers such as ammonium nitrate, urea, potash, and superphosphate, phytotoxicants and plant growth regulators and safeners. These may be used sequentially or in combination with the above-described compositions, if appropriate also added only immediately prior to use (tank mix). For example, the plant(s) may be sprayed with a composition of this invention either before or after being treated with the fertilizers.

Pyidimetoflufen is applied by treating the fungi or the plants, plant propagation materials (preferably seeds), materials or soil to be protected from fungal attack with a pesticidally effective amount of the pydiflumetofen. The application can be carried out both before and after the infection of the materials, plants or plant propagation materials (preferably seeds) by the pests.

In general, "pesticidally effective amount" means the amount of pydiflumetofen or of compositions comprising pydiflumetofen needed to achieve an observable effect on growth, including the effects of necrosis, death, retardation, prevention, and removal, destruction, or otherwise diminishing the occurrence and activity of the target organism. The pesticidally effective amount can vary. A pesticidally effective amount will also vary according to the prevailing conditions such as desired pesticidal effect and duration, weather, target species, locus, mode of application, and the like.

When preparing the compositions comprising pydiflumetofen, it is preferred to employ the pure active compound, to which optoinally further active compounds against pests, such as insecticides, herbidices, fungicides or else herbicidal or growth-regulating active compounds or fertilizers can be added as further active components according to need.

Preferably, pydiflumetofen is employed by treating the fungi or the plants or soil to be protected from pesticidal attack via foliar application with a pesticidally effective amount of the pydiflumetofen. Also herein, the application can be carried out both before and after the infection of the plants by the pests.

In the method of combating harmful fungi depending on the type of compound and the desired effect, the application rates of pydiflumetofen are from 0,1 g/ha to 10000 g/ha, preferably 2 g/ha to 2500 g/ha, more preferably from 5 to 1000 g/ha, most prefarebly from 10 to 750 g/ha, in particular from 20 to 700 g/ha.

In an alternative embodiment of the invention, the pydiflumetofen are used for the protection of the seed and the seedlings' roots and shoots, preferably the seeds as set forth above.

Compositions, which are especially useful for seed treatment are e.g.:
- A: Soluble concentrates (SL, LS)
- D: Emulsions (EW, EO, ES)
- E: Suspensions (SC, OD, FS)
- F: Water-dispersible granules and water-soluble granules (WG, SG)
- G: Water-dispersible powders and water-soluble powders (WP, SP, WS)
- H: Gel-Formulations (GF)
- I: Dustable powders (DP, DS)

These compositions can be applied to plant propagation materials, particularly seeds, diluted or undiluted. These compositions can be applied to plant propagation materials, particularly seeds, diluted or undiluted. The compositions in question give, after two-to-tenfold dilution, active substance concentrations of from 0.01 to 60% by weight, prefer-ably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e. g. by seed dressing, pelleting, coating and dusting.

In the treatment of plant propagation material (preferably seed), the application rates of the inventive mixture are generally for the formulated product (which usually comprises from10 to 750 g/l of the active(s)) .

The invention also relates to the propagation products of plants, and especially the seed comprising, that is, coated with and/or containing, a mixture as defined above or a composition containing the mixture of two or more active ingredients or a mixture of two or more compositions each providing one of the active ingredients. The plant propagation material (preferably seed) comprises pydiflumetofen in an amount of from 0.1 g to 10 kg per 100 kg of plant propagation material (preferably seed), preferably 0.1 g to 1 kg per 100 kg of plant propagation mate rial (preferably seed).

### Example 1 - Microtiter tests

Wheat leaves with typical symptoms of SLB were collected in 2015 from commercial sites and trial sites and sent to the company Epilogic (Freising, Germany) for isolation of single pycnidia isolates and subsequent testing for sensitivity to fluxapyroxad. Isolates with EC50 values outside the baseline sensitivity were sent to BASF and further investigated. Sensitivities of isolates towards the SDHI fungicides (benzovindiflupyr, bixafen, fluopyram, isopyrazam, penthiopyrad, pydiflumetofen) were determined by microtitre assays at different concentrations (0, 0.01, 0.03, 0.1, 0.3, 1.0, 3.0, 10.0 mg 1-1) of the SDHI fungicide in YBG-medium (1% yeast extract, 1% Bacto peptone, 2% glycerol). The medium in each well was inoculated with approximately 1000 cells and incubated for 6 d at 18°C before evaluation of the growth using a photometer (405 nm). Four replicates were made for each isolate and fungicide concentration. EC50 values (i.e. the concentration of the compound at which fungal development is inhibited by 50%) were calculated by Probit analysis. Results are shown in table 1.

**Table 1 EC50 values of SDHI sensitive and resistant isolates. The lower the EC50 value, the higher the sensitivity. SDHI resistant isolates showed lower sensitivity to SDHIs than sensitive wildtype strains (wt).**

| | WT¹ | C-H152R² | C-T79N³ | C-N86S⁴ | B-T268I⁵ |
|---|---|---|---|---|---|
| Fluopyram | 0,239 | 4,857 | 1,781 | 3,051 | 1,662 |
| Fluxapyroxad | 0,085 | 5,935 | 1,494 | 1,257 | 1,544 |
| Benzovindiflupyr | 0,031 | 1,632 | 0,511 | 1,403 | 0,761 |
| Isopyrazam | 0,083 | 6,397 | 0,734 | 1,793 | 1,109 |
| Bixafen | 0,051 | 6,831 | 0,823 | 1,233 | 1,338 |
| Penthiopyrad | 0,081 | 10,000 | 1,443 | 4,030 | 1,737 |
| Pydiflumetofen | 0,001 | 0,136 | 0,016 | 0,194 | 0,017 |

| | | | | | |
|---|---|---|---|---|---|
| 1 WT = Wild-type 2 C-H152R = [Isolate with H152R amino acid exchange in the SDH subunit C] 3 C-T79N = [Isolate with T79N amino acid exchange in the SDH subunit C] 4 C-N86S = [Isolate with N86S amino acid exchange in the SDH subunit C] 5 B-T268I = [Isolate with T268I amino acid exchange in the SDH subunit B] | | | | | |

Pydiflumetofen showed in microtiter tests a surpsigingly high intrinsic activity compared to other SDHIs on SDHI sensitive (wild type) and resistant isolates (with the amino acid exchanges T268I in the SDH-B gene or T79N, N86S, H152R in the SDH-C gene). Resistant isolates showed significant lower sensitivity (i.e. higher EC50 values) to all SDHIs than sensitive ones, except for the surprisingly high activitity of pydiflumetofen.

### Example 2 - Greenhouse

The impact of sdh mutated *S. triticiisolates* (two of each mutation) and two wild types on SDHIs were tested in the greenhouse (WT). Efficacy of active ingredients (tech a.i.) of *isopyrazam and penthiopyrad* were tested in a standard formulation. Isolates were grown on MYA medium (1% malt extract, 0.4% yeast extract, 0.4% glucose, 2% agar) for 7 days with a 12 h light /12 h dark cycle at 18°C. Fourteen-days-old wheat plants cv. Riband were spray-inoculated with spore suspensions (2.4 x 10⁶ spores/ml) until prior to run off, and incubated for 4 days at 18°C and 98% relative humidity (RH). Then, the SDHI fungicides were applied by spraying them in a spray chamber using a spray bar to simulate practical conditions. Water volume was adjusted to 400 I /ha. Afterwards plants were incubated at 16°C and 70-80% RH. Diseased leaf area containing pycnidia was assessed 21 days after inoculation and fungicide efficacy of was calculated by Abbott: % efficacy = (% disease in untreated - % disease in treatment) x 100 % / % disease in untreated. Results are shown in table 2.

**Table 2**

| SDHI Fungicide | g a.i./ha | WT (n=2) [%] | B-T268I (n=2) [%] | C-T79N (n=2) [%] | C-N86S (n=2) [%] | C-H152R (n=2) [%] |
|---|---|---|---|---|---|---|
| Xemium | 125 | 100,0 | 67,2 | 60,6 | 76,9 | 0,0 |
| Fluxapyroxad a.i. | 125 | 100,0 | 48,9 | 30,6 | 56,9 | 0,6 |
| Isopyrazam a.i. | 125 | 100,0 | 11,5 | 20,8 | 30,1 | 6,9 |
| Penthiopyrad a.i. | 300 | 100,0 | 30,1 | 62,5 | 40,3 | 0,4 |
| Pydiflumetofen a.i. | 125 | 100,0 | 100,0 | 100,0 | 100,0 | 100,0 |

As result, surprisingly, only pydiflumetofen showed high efficacy to all field isolates with SDHI resistance.

## Claims

1. A method for controlling *Septoria tritici* on cereals, comprising treating the plants, their seed or the soil with a fungicidally effective amount of pydiflumetofen, wherein the *Septoria tritici* is resistant to SDHI fungicides due to a T268I amino acid exchange in SDH subunit B, or a H152R, T79N, N86S, V166M or W80S amino acid exchange in SDH subunit C.

2. A method according to claim 1, wherein the cereal is wheat.

3. A method according to claim 1 or 2, wherein pydiflumetofen is applied to the plants.

4. A method according to claim 1 or 2, wherein pydiflumetofen is applied to the soil.

5. A method according to claim 1 or 2, wherein pydiflumetofen is applied to the seed of plants.

6. A method according to any of claims 1 to 4, wherein pydiflumetofen is applied in an amount from 5 g/ha to 2500 g/ha.

7. A method according to claim 5, wherein pydiflumetofen is applied to seeds in an amount from 0.01 g to 10 kg per 100

## Patentansprüche

1. Verfahren zur Bekämpfung von *Septoria tritici* auf Getreide, bei dem man die Pflanzen, ihre Samen oder den Boden mit einer fungizidwirksamen Menge von Pydiflumetofen behandelt,
wobei der *Septoria tritici* aufgrund einem T268I-Aminosäureaustausch in der SDH-Untereinheit B oder einem H152R-, T79N-, N86S-, V166M- oder W80S-Aminosäureaustausch in der SDH-Untereinheit C resistent gegenüber SDHI-Fungiziden ist.

2. Verfahren nach Anspruch 1, wobei es sich bei dem Getreide um Weizen handelt.

3. Verfahren nach Anspruch 1 oder 2, wobei Pydiflumetofen auf die Pflanzen angewendet wird.

4. Verfahren nach Anspruch 1 oder 2, wobei Pydiflumetofen auf dem Boden angewendet wird.

5. Verfahren nach Anspruch 1 oder 2, wobei Pydiflumetofen auf das Saatgut von Pflanzen angewendet wird.

6. Verfahren nach einem der Ansprüche 1 bis 4, wobei Pydiflumetofen in einer Menge von 5 g/ha bis 2500 g/ha angewendet wird.

7. Verfahren nach Anspruch 5, wobei Pydiflumetofen auf Samen in einer Menge von 0,01 g bis 10 kg pro 100 kg angewendet wird.

## Revendications

1. Procédé destiné à contrôler *Septoria tritici* sur des céréales, comprenant un traitement des plantes, de leurs graines ou du sol avec une quantité efficace, d'un point de vue fongicide, de pydiflumétofène,
dans lequel *Septoria tritici* est résistant à des fongicides SDHI à cause d'un échange d'acides aminés T268I dans la sous-unité B de la SDH ou d'un échange d'acides aminés H152R, T79N, N86S, V166M ou W80S dans la sous-unité C de la SDH.

2. Procédé selon la revendication 1, dans lequel la céréale est le blé.

3. Procédé selon les revendications 1 ou 2, dans lequel du pydiflumétofène est appliqué aux plantes.

4. Procédé selon les revendications 1 ou 2, dans lequel du pydiflumétofène est appliqué au sol.

5. Procédé selon les revendications 1 ou 2, dans lequel du pydiflumétofène est appliqué à la graine de plantes.

6. Procédé selon l'une quelconque des revendications 1 à 4, dans lequel du pydiflumétofène est appliqué en une quantité allant de 5 g/ha à 2 500 g/ha.

7. Procédé selon la revendication 5, dans lequel du pydiflumétofène est appliqué aux graines en une quantité allant de 0,01 g à 10 kg par 100 kg.
